# EUROPEAN PATENT APPLICATION

(11) **EP 3 744 600 A1**
(43) Date of publication of application: **02.12.2020**
(21) Application number: 18901455.8
(22) Date of filing: 22.01.2018
(51) Int. Cl.: B60W 40/04, B60W 30/00

(54) **VEHICLE CONTROL METHOD AND VEHICLE CONTROL DEVICE**

(71) Applicant: NISSAN MOTOR CO., LTD., Yokohama-shi, Kanagawa 221-0023 (JP)
(72) Inventor: FUKUMOTO, Yasuki, Atsugi-shi, Kanagawa 243-0123 (JP)
(74) Representative: Hoefer & Partner Patentanwälte mbB
(86) International application number: PCT/JP2018/001762
(87) International publication number: WO 2019/142356

(57) **Abstract**

Provided is a vehicle control method for controlling a vehicle that executes self-driving by which the vehicle is at least started and stopped without requiring an operation by a driver. With the vehicle control method, when an own vehicle enters an intersection while the self-driving is executed, it is determined whether or not there is another vehicle approaching the intersection in a lane that is opposite to or intersects with a lane in which the own vehicle travels based on how light from a headlamp of the another vehicle is seen, and the own vehicle is started or stopped based on a result of the determination.

## Description

### TECHNICAL FIELD

The invention relates to a vehicle control method and a vehicle control device.

### BACKGROUND ART

JP2017-84115A1 discloses a self-driving technology in which other vehicles around an own vehicle are detected with use of a camera, a radar, and so on mounted on the vehicle, and movement of the detected other vehicles are predicted.

### SUMMARY OF INVENTION

However, with the technology described in the foregoing document, it is not possible to predict movement of the another vehicle when the another vehicle cannot be directly detected by the camera, the radar, and so on, such as when the another vehicle is traveling outside an imaging range of the camera or outside a detection range of the radar, or when there is an obstacle between the another vehicle and the own vehicle even though the another vehicle is within those ranges.

Thus, an object of the invention is to predict movement of another vehicle even when the another vehicle is not detected directly by a camera, a radar, and so on.

According to one embodiment of this invention, a vehicle control method for controlling a vehicle that executes self-driving by which the vehicle is at least started and stopped without requiring an operation by a driver is provided. With the vehicle control method, when an own vehicle enters an intersection while the self-driving is executed, it is determined whether or not there is another vehicle approaching the intersection in a lane that is opposite to or intersects with a lane in which the own vehicle travels based on how light from a headlamp of the another vehicle is seen, and the own vehicle is started or stopped based on a result of the determination.

### BRIEF DESCRIPTION OF DRAWINGS

FIG. 1 is a configurational view of a vehicle.
FIG. 2 is a configurational view of a control system.
FIG. 3 is a view showing an example of an intersection.
FIG. 4 is a flowchart showing a control routine executed by a traveling controller.
FIG. 5 is a timing chart in a case where the control routine shown in FIG. 4 is executed.

### DESCRIPTION OF EMBODIMENTS

Hereinafter, an embodiment of the invention is described with reference to the drawings.

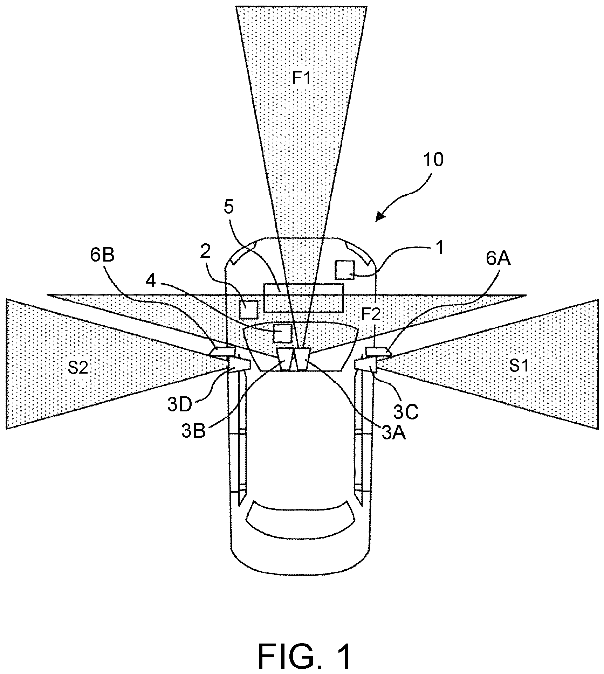

FIG. 1 is a configurational view of a vehicle 10 on which a vehicle control device according to the embodiment is mounted.

The vehicle 10 includes an engine 5 serving as a power source. As the engine 5, a gasoline engine or a diesel engine is used. In the following description, an "own vehicle" represents the vehicle 10.

Further, the vehicle 10 includes a traveling controller 1 serving as a traveling control unit, an engine controller 2, a front camera 3A, a front wide-angle camera 3B, a right side camera 3C, a left side camera 3D, and a navigation system 4. The front camera 3A, the front wide-angle camera 3B, the right side camera 3C, and the left side camera 3D configure an outside detection unit. In the following description, each of the cameras are referred to as a camera 3 when it is not necessary to distinguish each of the cameras.

The front camera 3A is arranged to align with a vehicle traveling direction, and, for example, near a rear-view mirror. Thus, the vehicle traveling direction is within an imaging region (F1 in the drawing).

The front wide-angle camera 3B is arranged to align with the vehicle traveling direction, and, for example, next to the front camera 3A. Although an imaging region (F2 in the drawing) of the front wide-angle camera 3B has a wide angle, it is short in the vehicle traveling direction. Therefore, the imaging region F2 practically extends in a lateral direction of the own vehicle as shown in the drawing.

The right side camera 3C is arranged, for example, near a right side mirror unit 6A, and its imaging range (S1 in the drawing) is a right side of the own vehicle. The left side camera 3D is arranged, for example, near a left side mirror unit 6B, and its imaging range (S2 in the drawing) is a left side of the own vehicle.

The navigation system 4 is arranged inside a vehicle cabin. Based on map information stored in advance and positional information from an artificial satellite, the navigation system 4 sets a traveling route to a destination input by a driver.

As shown in the drawing, the traveling controller 1 and the engine controller 2 are arranged inside an engine compartment in a front part of a vehicle body. The traveling controller 1 and the engine controller 2 may be arranged inside the vehicle cabin.

Both the traveling controller 1 and the engine controller 2 are made of microcomputers, respectively, each of which includes a central processing unit (CPU), a read-only memory (ROM), a random access memory (RAM), and an input/output interface (I/O interface). Each of the traveling controller 1 and the engine controller 2 may be made of a plurality of microcomputers.

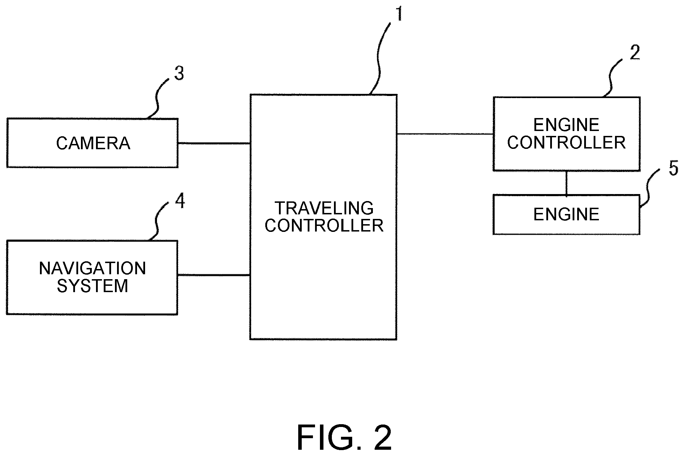

FIG. 2 is a configurational view of a control system centering around a control device according to the embodiment.

The camera 3 outputs captured image data to the traveling controller 1. The image data includes, for example, a stop line on a road surface, a state of a traffic signal, a vehicle traveling around the own vehicle, and so on. The camera 3 also has a function of detecting intensity of light inside the captured image. The light may be direct light or reflected light.

Places of installation of stop lines and traffic signals included in the map information that the navigation system 4 has, and the traveling route set by the navigation system 4 are output to the traveling controller 1. Detection signals from non-illustrated vehicle speed sensor, an accelerator sensor, an azimuth sensor and so on are also input to the traveling controller 1.

The traveling controller 1 serving as a self-driving control unit performs traveling control including starting and stopping of the vehicle based on input information, detection signals and so on, when self-driving is executed. When starting the vehicle, the traveling controller 1 sets target vehicle speed and target acceleration based on the target vehicle speed, and sets target driving force for realizing the target acceleration. Then, the traveling controller 1 outputs the target driving force to the engine controller 2.

The engine controller 2 controls an output of the engine 5 based on the input target driving force.

Further, when stopping the vehicle, the traveling controller 1 sets target braking force based on a stop position such as a stop line and an entrance of an intersection, and outputs the target braking force to a non-illustrated braking controller. The braking controller controls a non-illustrated braking device based on the target braking force. This braking device includes a hydraulic brake and a regenerative brake. Further, the traveling controller 1 also executes s so-called idle stop control by which the engine 5 is stopped while the vehicle is stopped.

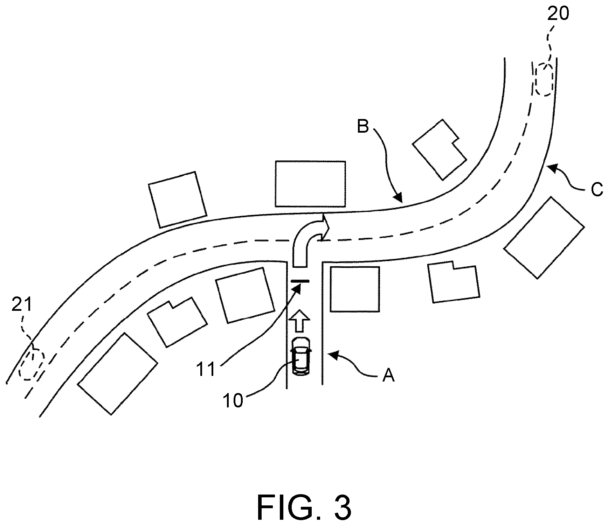

Next, control executed when the vehicle enters an intersection during the self-driving is described with reference to FIG. 3.

Description is given using an example case where the vehicle 10 is on a traveling route in which the vehicle 10 turns right at the intersection from lane A and enters lane B. After stopping at the stop line 11, the vehicle 10 moves forward until right before the intersection, and stops again for conformation of safety. "Right before the intersection" is a position at which a given range of the lane B and the lane C sandwiching the intersection is within the imaging range of the camera 3, and is also a position at which the vehicle 10 does not obstruct a vehicle traveling in an intersecting lane.

When the vehicle 10 stops at a stop line 11, the traveling controller 1 does not execute the idle stop because it knows that the vehicle 10 will start immediately after stopping. However, when the vehicle 10 stops right before the intersection in order to confirm safety, the idle stop is executed.

When the vehicle 10 stops right before the intersection, the traveling controller 1 uses the camera 3 to determine whether or not there is any vehicle on the lane B or the lane C approaching the intersection (hereinafter, also referred to as an approaching vehicle). Then, when there is an approaching vehicle, the idle stop is continued until the approaching vehicle passes the intersection. When there is no approaching vehicle, the vehicle 10 turns right at the intersection and travels in the lane B.

As shown in FIG. 3, since the lane B and the lane C are curved, vehicle bodies of an approaching vehicle 20 and an approaching vehicle 21 may not be recognized by the camera 3 of the vehicle 10 that is stopped right before the intersection. In such a case, when it is determined that there is no approaching vehicle and the vehicle 10 starts, the approaching vehicle 20 and the approaching vehicle 21 approach the intersection and enter the imaging range of the camera 3 before the vehicle 10 turns right completely. Thus, the vehicle 10 may have to stop again inside the intersection. This means that, as the vehicle 10 enters the intersection because the vehicle bodies of the approaching vehicles 20, 21 traveling on the lanes B, C are not recognizable in the image data, then the vehicle 10 might have to stop again inside the intersection. Further, when the vehicle 10 stops inside the intersection as described above, the engine 5 needs to be restarted when the vehicle 10 starts in order to enter the intersection, and when the vehicle 10 starts after the approaching vehicles 20, 21 have passed. Thus, compared to a case where the idle stop is continued right before the intersection until the approaching vehicles 20, 21 pass, a duration of the idle stop is shortened, and the number of restarts of the engine is increased. This may cause a deterioration of fuel consumption performance.

Thus, the traveling controller 1 according to the embodiment executes a control routine described below in order to appropriately determine whether or not the vehicle 10 should enter the intersection even when the vehicle bodies of the approaching vehicles 20, 21 cannot be recognized by the camera 3.

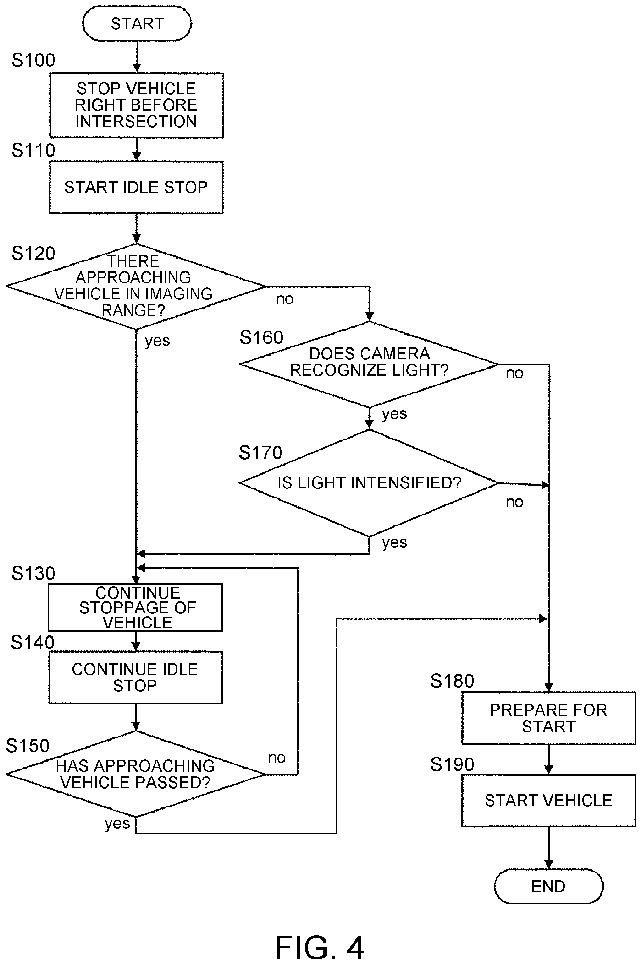

FIG. 4 is a flowchart showing the control routine programmed in the traveling controller 1. The control routine is executed when the vehicle 10 enters the intersection. It is possible to determine whether or not the vehicle 10 should enter the intersection based on the set traveling route and the map information. For example, in the situation shown in FIG. 3, the control routine is executed when the vehicle 10 starts from the state where the vehicle 10 stops at the stop line 11.

In step S100, the traveling controller 1 causes the vehicle 10 to stop right before the intersection. Then, in step S110, the traveling controller 1 decides to start the idle stop. Accordingly, the engine controller 2 stops the engine 5.

In step S120, the traveling controller 1 determines whether or not there is any approaching vehicle based on the image data from the camera 3. Here, it is determined that there is an approaching vehicle when a vehicle body of the approaching vehicle is recognized from the image data of the camera 3, and otherwise it is determined that there is no approaching vehicle. When the traveling controller 1 determines that there is an approaching vehicle, processing of step S130 is executed, and processing of step S160 is executed when the traveling controller 1 determines that there is no approaching vehicle.

In the step S130, the traveling controller 1 decides to continue stoppage of the vehicle 10, and sends a command to the engine controller 2 to continue the idle stop in step S140.

In step S150, the traveling controller 1 determines whether or not the approaching vehicle has passed in front of the own vehicle based on the image data. When the approaching vehicle has passed, the traveling controller 1 executes processing of step S180, and, when the approaching vehicle has not passed, the traveling controller 1 returns to the processing of the step S130.

Meanwhile, in step S160 that is executed when the vehicle body of the approaching vehicle is not recognized by the camera 3, the traveling controller 1 determines whether or not it is possible to recognize light based on the function of the camera 3. Here, the light includes not only light that is reflected by a building by the road or a road surface (hereinafter, also referred to as reflected light) but also direct light. The traveling controller 1 executes processing of step S170 when light is recognized, and executes the processing of step S180 when light is not recognized.

In step S170, the traveling controller 1 determines whether or not the light is intensified. Specifically, the traveling controller 1 determines whether or not intensity of the light detected by the camera 3 is getting higher over time. Here, the state of "getting higher over time" includes not only a case where the light is intensified continuously with passage of time, but also a case where the light is intensified step by step at given period. This step is for determining whether or not an approaching vehicle is present based on how the light is seen. Even when the camera 3 is not able to recognize the vehicle bodies of the approaching vehicle 20 and the approaching vehicle 21 from the position right before the intersection as described in FIG. 3, it is possible to presume that the approaching vehicles are present when reflected light is intensified over time, the reflected light being reflected by a road surface, a building by the road, or the like. Also, even when the light is recognized, it is possible to presume that the approaching vehicles are stopped for some reasons when the light is not intensified over time.

In the step S170, when the light is intensified, it is determined that there are the approaching vehicles. However, this is only an example of a determination method based on how the light is seen, and the invention is not necessarily limited to this. For example, when a range illuminated and brightened by light expands over time, it may be determined that there is an approaching vehicle.

When the traveling controller 1 determines in the step S170 that the light is intensified, in other words, when the traveling controller 1 determines that there is an approaching vehicle, the traveling controller 1 decides to continue stoppage of the vehicle in the step S130, and, otherwise, executes the processing of the step S180.

In the step S180, the traveling controller 1 outputs a start preparation command to the engine controller 2. Specifically, the start preparation command means a restart command for the engine 5.

In step S190, after the traveling controller 1 confirms that the engine 5 has restarted, the traveling controller 1 outputs a braking release command to a non-illustrated brake controller, and starts the vehicle 10.

As described above, the traveling controller 1 does not immediately determine that there is no approaching vehicle because the camera is not able to recognize a vehicle body of an approaching vehicle, and determines whether or not an approaching vehicle is present based on how the light is seen (steps S120, S160, S170). Described below are effects obtained by this determination method described above.

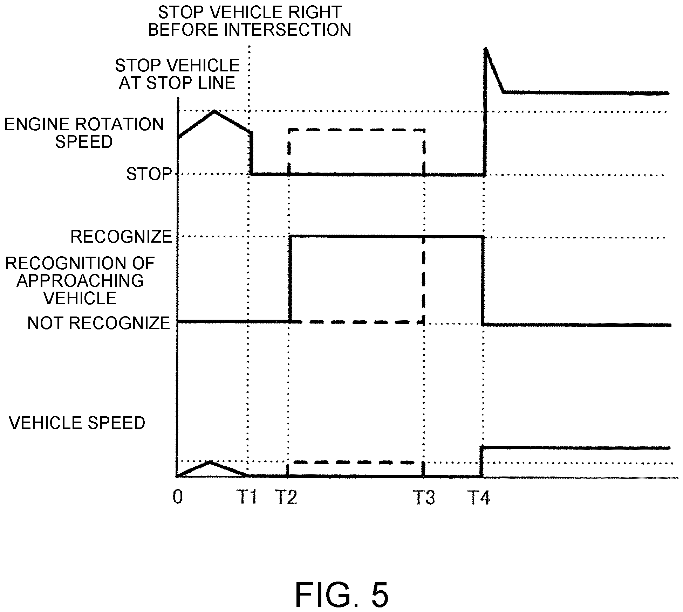

FIG. 5 is a timing chart of a case where the control routine shown in FIG. 4 is executed. In FIG. 5, a solid line represents a case where this embodiment is carried out, and, as a comparative example, a broken line represents a case where the determination based on how the light is seen (steps S160 and S170) is not made. The comparative example is not included in the scope of the invention.

A case is assumed in which the approaching vehicle is present on the lane B or the lane C and although the camera 3 is not able to recognize the vehicle body of the approaching vehicle, the camera 3 is able to recognize reflected light of headlamps of the approaching vehicle, the reflected light being reflected on a road surface, a building, and so on.

In FIG. 5, timing 0 is timing at which the vehicle 10 that stops at a stop line starts, and timing T1 is timing at which the vehicle 10 stops right before an intersection and starts the idle stop. The timing T2 is timing at which the determination of whether or not there is an approaching vehicle is ended in the state where the vehicle 10 is stopped right before the intersection.

According to the embodiment, since the traveling controller 1 recognizes presence of an approaching vehicle based on how the light is seen. Therefore, the idle stop is continued after the timing T2 and ends at timing T4 at which the approaching vehicle passes.

On the contrary, in the comparative example, when there is not any approaching vehicle within the imaging range of the camera, the traveling controller determines that there is no approaching vehicle, and the vehicle thus starts at timing T2. However, once an approaching vehicle enters the imaging range of the camera after the vehicle starts, the traveling controller recognizes presence of the approaching vehicle and causes the vehicle to stop at timing T3. Then, the idle stop is performed again until timing T4 at which the approaching vehicle passes.

As described above, in this embodiment, the idle stop continues from the timing T 1 through the timing T4, while the idle stop is not performed from the timing T2 through the timing T3 in the comparative example. Thus, according to this embodiment, duration of the idle stop is longer than that of the comparative example. Then, the longer the duration of the idle stop, the more fuel consumption performance is improved compared to the comparative example.

Further, in this embodiment, the number of starts of the engine from the timing T1 through the timing T4 is less than that in the comparative example. When the engine starts, extra fuel is injected in order to make sure ignition happens. Therefore, the larger the number of starts of the engine, the more the fuel consumption performance is degraded. This means that, according to the embodiment, the fewer the number of starts of the engine, the more fuel consumption performance is improved compared to the comparative example.

As described so far, according to the embodiment, when the vehicle 10 enters an intersection while the self-driving is executed, it is determined whether or not there is another vehicle approaching the intersection (the approaching vehicles 20, 21) in lanes opposite to or intersecting the lane in which the own vehicle (the vehicle 10) travels based on how the light from the headlamp of the another vehicle is seen, and the own vehicle is started or stopped based on the determination result. Thus, even when the vehicle bodies of the approaching vehicles 20, 21 are not present within the imaging range of the camera 3, it is possible to recognize presence of the approaching vehicles 20, 21, and it is thus possible to appropriately determine whether or not the vehicle 10 should enter the intersection. As a result, it is possible to avoid that the vehicle 10 stops inside the intersection.

In this embodiment, when the light of the headlamp of the approaching vehicle is intensified, it is determined that there is another vehicle approaching the intersection. Hence, when the approaching vehicle stops for some reason, it is determined that there is no approaching vehicle and the vehicle is able to start.

In this embodiment, when the own vehicle is stopped before entering the intersection, and the power source (the engine 5) is stopped, the power source is not restarted when it is determined that there is another vehicle approaching the intersection. Because of this, it is possible to suppress fuel consumption caused by unnecessary travel.

Next, a modified example of the embodiment is described. The modified example described below is also within the scope of the invention.

In FIG. 3, a case is assumed that only the vehicle 10 and the approaching vehicle 21 are approaching the intersection, and the vehicle 10 turns left at the intersection. In this case, a course of the approaching vehicle 21 does not coincide or intersect with the course of the vehicle 10. Therefore, the vehicle 10 is able to turn left regardless of the presence of the approaching vehicle 21.

As described above, there are instances where the vehicle 10 is able to enter the intersection even though there is an approaching vehicle.

Thus, in this modified example, when the determination result of the step S120 is yes, and the determination result of the step S170 is yes in FIG. 4, processing is executed in order to determine whether or not the course of the approaching vehicle intersects or coincides with the traveling route of the vehicle 10 before the step S130. Then, when the course of the approaching vehicle does not intersect or coincide with the traveling route of the vehicle 10, the processing of the step S180 is executed, and, when the course of the approaching vehicle interests or coincides with the traveling route of the vehicle 10, the processing of the step S130 is executed.

As described above, in this modified example, even when it is determined that there is another vehicle approaching the intersection (the approaching vehicle), the engine is restarted in the case where the course of the another vehicle does not intersect or coincide with the course of the own vehicle (the vehicle 10). Thus, it is possible to avoid that the vehicle stops unnecessarily.

In the foregoing embodiment and the modified example, the case is described where the intersection is a T junction. However, the invention is also applicable to a cross road. In the case of the cross road, it is necessary to determine whether or not there is an approaching vehicle that travels in the lane opposite to that of the vehicle 10 towards the intersection. Also in this case, presence of the vehicle body of the approaching vehicle is confirmed, and, when the vehicle body is not confirmed, presence of the approaching vehicle is determined based on how light is seen.

Further, according to this embodiment, even when the vehicle body of the approaching vehicle cannot be recognized because there is a vehicle parked on a street, or the like between the own vehicle and the approaching vehicle, it is possible to recognize that the approaching vehicle is approaching based on how the light of the headlamp reflected by a road surface or a guardrail is seen.

The embodiment of the invention has been described so far. However, the foregoing embodiment shows only a part of application of the invention, and is not intended to limit the technical scope of the invention to the specific configuration of the foregoing embodiment.

## Claims

1. A vehicle control method for controlling a vehicle that executes self-driving by which the vehicle is at least started and stopped without requiring an operation by a driver, the vehicle control method comprising:
when an own vehicle enters an intersection while the self-driving is executed, determining whether or not there is another vehicle based on how light from a headlamp of the another vehicle is seen, the another vehicle approaching the intersection in a lane that is opposite to or intersects with a lane in which the own vehicle travels; and
starting or stopping the own vehicle based on a result of the determination.

2. The vehicle control method according to claim 1, comprising determining that there is the another vehicle approaching the intersection when the light of the headlamp of the another vehicle is intensified.

3. The vehicle control method according to claim 1 or 2, comprising;
stopping the own vehicle before the own vehicle enters the intersection, and also stopping a power source; and
when the another vehicle approaching the intersection is determined to be present, not restarting the power source.

4. The vehicle control method according to claim 3, comprising, even when the another vehicle approaching the intersection is determined to be present, restarting the power source in a case where a course of the another vehicle does not intersect or coincide with a course of the own vehicle.

5. A vehicle control device, including:
a self-driving control unit that executes self-driving by which a vehicle is at least started and stopped without requiring an operation by a driver; and
an outside detection unit that detects a situation of an outside of an own vehicle, in which, when the own vehicle enters an intersection while the self-driving is executed, the self-driving control unit uses the outside detection unit to determine whether or not there is another vehicle approaching the intersection in a lane that is opposite to or intersects with a lane in which the own vehicle travels, wherein,
when the outside detection unit is not able to recognize a vehicle body of the another vehicle, the self-driving control unit determines whether or not there is the another vehicle based on how detected light is seen, and starts or stops the own vehicle based on a result of the determination.
